# EUROPÄISCHE PATENTSCHRIFT

(11) **EP 3 640 198 B1**
(45) Veröffentlichungstag und Bekanntmachung des Hinweises auf die Patenterteilung: **20.05.2026**
(21) Anmeldenummer: 19199533.1
(22) Anmeldetag: 25.09.2019
(51) Int. Cl.: B67C 7/00

(54) **VERFAHREN ZUM HANDHABEN VON DOSEN ODER DERGLEICHEN BEHÄLTERN IN EINER FÜLLMASCHINE UND FÜLLMASCHINE**
FILLING MACHINE AND METHOD FOR HANDLING CANS OR SIMILAR CONTAINERS IN A FILLING MACHINE
PROCÉDÉ DE MANIPULATION DE POTS OU DE RÉCIPIENTS SIMILAIRES DANS UNE MACHINE DE REMPLISSAGE ET MACHINE DE REMPLISSAGE

(30) Priorität: 18.10.2018 DE 102018217860
(43) Veröffentlichungstag der Anmeldung: 22.04.2020
(73) Patentinhaber: KRONES Aktiengesellschaft, 93073 Neutraubling (DE)
(72) Erfinder: Landler, Bruno, 93073 Neutraubling (DE); Schoenfelder, Markus, 93073 Neutraubling (DE)
(74) Vertreter: Grünecker Patent- und Rechtsanwälte PartG mbB

(56) Entgegenhaltungen:
- EP-A1- 0 405 259
- EP-A1- 3 246 258
- WO-A1-2008/104932
- DE-C- 251 566
- DE-C- 890 026
- US-A- 3 695 315

## Beschreibung

Die Erfindung betrifft ein Verfahren zum Handhaben von Dosen oder dergleichen Behältern in einer Füllmaschine gemäß dem Oberbegriff des Anspruchs 1, sowie eine Füllmaschine gemäß dem Oberbegriff des Anspruchs 8.

Für die Abfüllung flüssiger Produkte und insbesondere von Getränken in Dosen oder dergleichen Behälter eignen sich bekanntermaßen volumetrisch arbeitende Füllmaschinen umlaufender Bauart. Bei derartigen Füllmaschinen werden die Dosen eingangsseitig einem Einlaufstern zugeführt, der die Dosen an einem Übergangspunkt an ein Füllerkarussell übergibt. An diesem werden untere Bereiche der Dosen von einem am Füllerkarussell mitlaufenden Führungsstern mit nach außen hin halbkreisförmig offenen Sterntaschen aufgenommen und sowohl bezüglich des Teilkreises des Füllerkarussells zentriert als auch auf Transportteilung gehalten.

Ein gattungsgemäßes Verfahren und eine gattungsgemäße Vorrichtung sind aus der DE 890 026 C bekannt.

Aus der EP 3 246 258 A1 ist ferner eine Abfüllanlage bekannt, bei der Dosen von einer Füllmaschine mittels Transfersternrädern an eine Verschließmaschine übergeben werden. Zur Reduzierung seitlicher Richtungswechsel sind die Teilkreise der Füllmaschine und des anschließenden Transfemstemrads in Abstand zueinander angeordnet, wobei die Dosen beim Übergang zwischen den Teilkreisen zwischen seitlichen Führungsgeländern geführt werden und der Abstand zwischen den Teilkreisen mittels radial über den Teilkreis der Füllmaschine überstehender Zahnflanken mit konvexer Krümmung überbrückt wird. Dadurch wird eine unerwünschte seitliche Beschleunigung der Behälter beim Richtungswechsel zwischen den Teilkreisen abgeschwächt.

Stromabwärts des Übergangspunkts werden Füllventile an einem Aufsetzpunkt zentrierend auf die Dosen aufgesetzt, so dass die Dosen beim Füllen sowohl axial eingespannt als auch in einem oberen Bereich bezüglich des zugeordneten Füllventils zentriert sind. Nach dem Füllen werden die Dosen von einer Mitnehmerkette aus den Sterntaschen des Führungssterns herausgeführt und einer anschließenden Verschließmaschine zugeführt.

Der Führungsstern zur Dosenaufnahme am Füllerkarussell ist eine formatspezifische Garnitur und beispielsweise in Form austauschbarer Ringsegmente ausgebildet. Diese sind passend zum jeweiligen Dosenformat am Füllerkarussell zu montieren bzw. auszutauschen. Hierfür kann beispielsweise ein Schnellwechselsystem vorhanden sein, um einen im Wesentlichen werkzeuglosen Austausch derartiger Garnituren zu erleichtern.

Nachteilig hierbei ist, dass die Transporttaschen derartiger Führungssterne vergleichsweise präzise gefertigt werden müssen, um die Dosen unterhalb der Füllventile korrekt zu zentrieren. Dadurch entsteht ein erheblicher Kostenaufwand. Zudem werden derartige Füllmaschinen für unterschiedlich große Füllerteilkreise konzipiert, so dass dafür unterschiedliche Garnituren hergestellt und vorgehalten werden müssen, und zwar passend zu allen zu verarbeitenden Dosendurchmessern. Erheblicher Aufwand entsteht auch am Produktionsort für die Lagerung der unterschiedlichen Dosengarnituren und hinsichtlich des Personalaufwands und der unausweichlichen Produktionsunterbrechungen für die Montage.

Es besteht daher der Bedarf für eine diesbezüglich verbesserte Handhabung von Dosen oder dergleichen Behälter in Füllmaschinen und für diesbezüglich verbesserte Füllmaschinen.

Die gestellte Aufgabe wird mit einem Verfahren nach Anspruch 1 gelöst. Demnach dient dieses zum Handhaben von Dosen oder dergleichen Behälter in einer Füllmaschine. Die Behälter werden in Sterntaschen eines Einlaufsterns wenigstens bis zu einem eingangsseitigen Übergangspunkt zu einem Füllerteilkreis geführt. Erfindungsgemäß werden die Behälter von an die Sterntaschen anschließenden Zahnflanken des Einlaufsterns wenigstens bis an einen Aufsetzpunkt für entlang des Füllerteilkreises umlaufende Füllventile mitgenommen und insbesondere geschoben.

Am eingangsseitigen Übergangspunkt wechselt die Bewegungsbahn der Dosen definitionsgemäß vom Einlaufteilkreis des Einlaufsterns zum Füllerteilkreis eines direkt anschließenden Füllerkarussells.

Unter einer Mitnahme der Dosen ist zu verstehen, dass diese wenigstens vor und beim Überschub auf eine am Füllerkarussell umlaufende Bodenplatte von den Zahnflanken geschoben und von diesen anschließenden wenigstens bis zum Aufsetzpunkt weitergeführt werden.

Die Zahnflanken des Einlaufsterns transportieren die Behälter auch nach dem Verlassen des Einlaufteilkreises weiter. Eine die Transportteilung der Dosen erhaltende Mitnahme durch das Füllerkarussell ist daher zwischen Übergangspunkt und Aufsetzpunkt entbehrlich und somit auch formatspezifische Führungssterne mit Transporttaschen zur Dosenaufnahme auf dem Füllerkarussell. Entsprechend entfällt jeglicher mit solchen Garnituren verbundene Aufwand.

Die Behälter werden von den jeweils nachlaufenden Zahnflanken des Einlaufsterns zwischen eingangsseitigem Übergangspunkt und Aufsetzpunkt im Wesentlichen unter Einhaltung der Transportteilung des Einlaufsterns und mit der Transportgeschwindigkeit des Füllerkarussells mitgenommen. Die nachlaufenden Zahnflanken könnten die Dosen hierbei prinzipiell auch seitlich führen. Dies ist aber nicht zwingend erforderlich, da die Bewegungsbahn der Dosen zwischen eingangsseitigem Übergangspunkt und Aufsetzpunkt durch stationäre seitliche Führung entlang des Füllerteilkreises vorgegeben werden kann.

Vorzugsweise werden die Dosen von konvex gekrümmten und/oder außerhalb des Einlaufteilkreises angeordneten Endabschnitten der Zahnflanken zum Aufsetzpunkt mitgenommen. Dies ermöglicht eine kontinuierliche Mitnahme entlang des Füllerteilkreises. Ferner werden Kollisionen der Dosen mit den Zähnen bei der Zufuhr der Dosen zum Einlaufstern vermieden.

Vorzugsweise legen die Dosen vom eingangsseitigen Übergangspunkt bis zum Aufsetzpunkt einen Maschinenwinkel von 1° bis 10° zurück. Dieser Maschinenwinkel des Füllerkarussells kann auch als Aufsetzwinkel der Füllventile bezeichnet werden. Der Aufsetzwinkel richtet sich nach dem Durchmesser des Füllerteilkreises, der Transportteilung und dem Durchmesser der Dosen. Der genannte Bereich des Maschinenwinkels / Aufsetzwinkels eignet sich besonders gut für gängige Dosenformate und Füllerteilkreise sowie Transportteilungen zur beschriebenen Mitnahme der Dosen zwischen eingangsseitigem Übergangspunkt und Aufsetzpunkt.

Vorzugsweise werden die Dosen ab dem Aufsetzpunkt, insbesondere ausschließlich, von den Füllventilen bezüglich des Füllerteilkreises zentriert und/oder Transportteilung des Füllerkarussells gehalten. Ein am Füllerkarussell mitlaufender Führungsstern ist daher entbehrlich.

Vorzugsweise werden die Dosen vom eingangsseitigen Übergangspunkt bis zum Aufsetzpunkt von einer außerhalb des Füllerteilkreises angeordneten, eingangsseitigen Führungsschiene seitlich entlang des Füllerteilkreises geführt. Die Zahnflanken des Einlaufsterns müssen daher keine seitliche Führungsfunktion bei der Mitnahme der Dosen erfüllen.

Vorzugsweise werden die Dosen an einem Übergangspunkt zu einer an das Füllerkarussell anschließenden Mitnehmerkette von wenigstens einer innerhalb des Füllerteilkreises angeordneten, ausgangsseitigen Führungsschiene seitlich geführt. Dadurch können die Dosen auf einfache und sanfte Weise vom Füllerteilkreis im Wesentlichen tangential ausgeleitet und an die Mitnehmerkette und ein zugeordnetes Förderband übergeben werden.

Vorzugsweise werden die Füllventile von den Dosen erst abgehoben, nachdem die Dosen die ausgangsseitige Führungsschiene erreicht haben. Dies ermöglicht einen richtungsstabilen Überschub der Dosen auf ein der Mitnehmerkette zugeordnetes Förderband.

Die gestellte Aufgabe wird ebenso gelöst mit einer Füllmaschine gemäß Anspruch 8. Demnach dient diese zum Abfüllen flüssiger Produkte in Dosen oder dergleichen Behälter und umfasst einen Einlaufstern und ein Füllerkarussell mit daran umlaufenden Füllventilen. Der Einlaufstern weist Sterntaschen auf, um die Dosen wenigstens bis zu einem auf dem Füllerteilkreis des Füllerkarussells liegenden eingangsseitigen Übergangspunkt zu führen. Erfindungsgemäß sind an die Sterntaschen anschließende Zahnflanken derart ausgebildet, dass sie die Dosen wenigstens bis an einen Aufsetzpunkt zum Aufsetzen der Füllventile auf die Dosen mitnehmen und insbesondere schieben. Dadurch lassen sich die bezüglich des Anspruchs 1 beschriebenen Vorteile erzielen.

Vorzugsweise erstrecken sich die Zahnflanken nach außen über den Einlaufteilkreis des Einlaufsterns hinaus. Die Sterntaschen liegen im Wesentlichen innerhalb des Einlaufteilkreises und dienen der Zufuhr der Dosen zum eingangsseitigen Übergangspunkt. Innerhalb des Einlaufteilkreises sind die Sterntaschen auf bekannte Weise konkav ausgebildet und haben insbesondere eine im Wesentlichen halbkreisförmige Kontur. Die über den Einlaufteilkreis hinausreichenden Zahnflanken sind demgegenüber zur anschließenden Mitnahme der Dosen zum Aufsetzpunkt der Füllventile ausgebildet.

Vorzugsweise weisen die Zahnflanken konvex gekrümmte Endabschnitte auf, um die Dosen daran entlanglaufend zum Aufsetzpunkt mitzunehmen. Konvexe Zahnflankenkonturen begünstigen ein gleichmäßiges Weiterschieben der Dosen entlang des Füllerteilkreises.

Vorzugsweise ist der Aufsetzpunkt um einen Maschinenwinkel von 1° bis 10° versetzt stromabwärts des eingangsseitigen Übergangspunkts angeordnet. Dies ermöglicht eine Mitnahme der Dosen entlang des Füllerteilkreises unter Einhaltung der Transportteilung für unterschiedliche Teilkreisdurchmesser und/oder Transportteilungen und/oder Dosendurchmesser.

Vorzugsweise sind die Füllventile zum Absenken auf die Dosen und zu deren selbstführender Zentrierung bezüglich des Füllerteilkreises ausgebildet. Stromabwärts des Aufsetzpunkts werden daher keine zusätzlichen, am Füllerkarussell mitlaufenden Bauteile zur Führung / Zentrierung der Dosen benötigt.

Vorzugsweise umfasst die Füllmaschine wenigstens eine sich wenigstens vom eingangsseitigen Übergangspunkt bis zum Aufsetzpunkt außerhalb und entlang des Füllerteilkreises erstreckende, eingangsseitige Führungsschiene für die Dosen. Dadurch lassen sich die Dosen stromaufwärts des Aufsetzpunkts seitlich führen, insbesondere entgegen am Füllerkarussell auf die Dosen wirkende Fliehkräfte oder dergleichen. Entsprechend können die Konturen der Zahnflanken des Einlaufsterns vorrangig hinsichtlich eines die Transportteilung erhaltenden Mitnehmens / Weiterschiebens der Dosen entlang des Füllerteilkreises optimiert werden.

Vorzugsweise umfasst die Füllmaschine ferner wenigstens eine an einem ausgangsseitigen Übergangspunkt zu einer an das Füllerkarussell anschließenden Mitnehmerkette innerhalb des Füllerteilkreises angeordneten, ausgangsseitigen Führungsschiene für die Dosen. Dies ermöglicht eine sanfte Übergabe der Dosen vom Füllerkarussell an die Mitnehmerkette im Wesentlichen tangential zum Füllerteilkreis.

Vorzugsweise umfasst die Mitnehmerkette Mitnehmer, insbesondere mit einer konkaven Führungskontur / Ausnehmung, zum Mitnehmen der Dosen wenigstens ab einem stromaufwärts des ausgangsseitigen Übergangspunkts liegenden Abhebepunkt zum Abheben der Füllventile von den Dosen. Dies ermöglicht ein schonendes tangentiales Ausleiten der Dosen aus dem Füllerteilkreis insbesondere mit verbesserter seitlicher Führung der Dosen beim Herunterschieben der Dosen von einer am Füllerkarussell mitrotierenden Bodenplatte.

Vorzugsweise ist die Füllmaschine Bestandteil einer Abfüllanlage mit einer stromabwärts an die Füllmaschine anschließenden Verschließmaschine.

Eine bevorzugte Ausführungsform der Erfindung ist zeichnerisch dargestellt. Es zeigen:
- Figur 1: eine schematische Draufsicht auf den Einlaufbereich einer erfindungsgemäßen Füllmaschine;
- Figur 2: einen vergrößerten Ausschnitt aus der Figur 1 im Bereich des Übergangspunkts und des Aufsetzpunkts;
- Figur 3: eine alternative Ausführungsform des Einlaufsterns; und
- Figur 4: eine schematische Darstellung eines Auslaufbereichs der Füllmaschine.

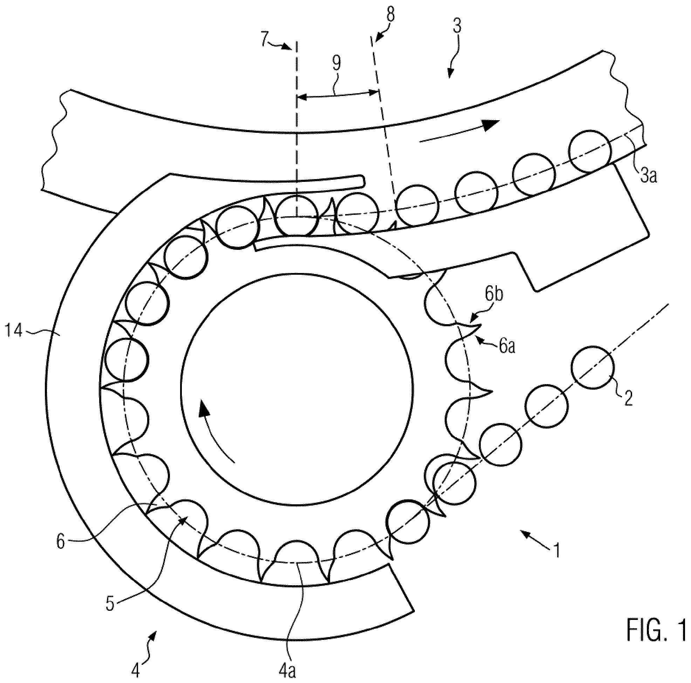

Wie die Figur 1 erkennen lässt, umfasst die Füllmaschine 1 für Dosen 2 ein im Abfüllbetrieb kontinuierlich (in der beispielhaft angedeuteten Pfeilrichtung) rotierendes Füllerkarussell 3 mit einem Füllerteilkreis 3a und einen im Einlaufbereich der Füllmaschine 1 angeordneten Einlaufstern 4 mit einem Einlaufteilkreis 4a.

Der Einlaufstern 4 umfasst Sterntaschen 5 und dazwischen jeweils Zähne 6, die radial derart über den Einlaufteilkreis 4a überstehen, dass sie die Dosen 2 von einem eingangsseitigen Übergangspunkt 7 zwischen Einlaufteilkreises 4a und Füllerteilkreis 3a weiter bis zu einem Aufsetzpunkt 8 für an dem Füllerkarussell 3 umlaufende Füllventile mitnehmen / schieben. Zu diesem Zweck weisen die Zähne 6 eine speziell konturierte, den Dosen jeweils nachlaufende Zahnflanke 6a mit einem vorzugsweise konvex gekrümmten freien Endabschnitt auf.

Die Sterntaschen 5 übernehmen die Dosen 2 beispielsweise von einer (nicht dargestellten) Einteilschnecke und transportieren die Dosen 2 auf bekannte Weise bis zum eingangsseitigen Übergangspunkt 7. Dort berühren sich Füllerteilkreis 3a und Einlaufteilkreis 4a tangential.

Stromabwärts des eingangsseitigen Übergangspunkts 7 laufen die Dosen 2 aus den Sterntaschen 5 heraus und dabei an den anschließenden Zahnflanken 6a entlang und bleiben mit diesen wenigstens bis zum Aufsetzpunkt 8 in Kontakt.

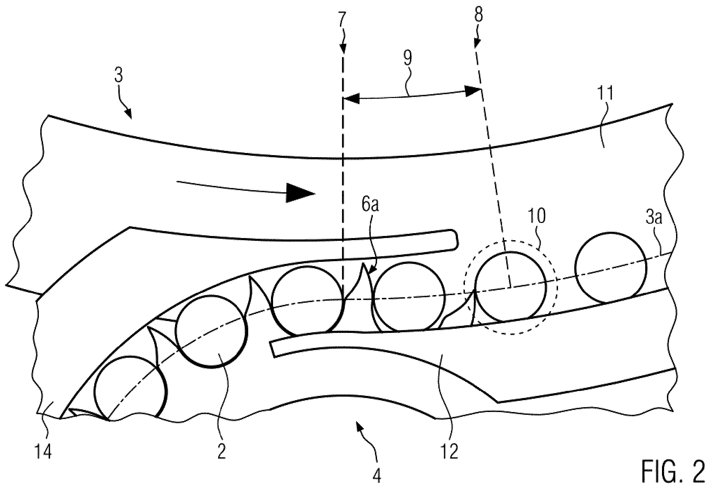

Die Figur 2 verdeutlicht die Position einer Dose 2 und einer dieser nachlaufenden Zahnflanke 6a beim Erreichen des Aufsetzpunkts 8. Ferner lässt sich insbesondere in der Figur 2 erkennen, dass der Aufsetzpunkt 8 um einen Maschinenwinkel 9 des Füllerkarussells 3 versetzt stromabwärts des eingangsseitigen Übergangspunkts 7 angeordnet ist.

Am Aufsetzpunkt 8 ist ein auf eine Dose 2 abgesenktes und diese dabei selbst zentrierendes Füllventil 10 schematisch durch gestrichelte Linie angedeutet. Die Dosen 2 stehen dabei auf einer am Füllerkarussell 3 mitrotierenden Bodenplatte 11.

Die Dosen 2 werden von den Sterntaschen 5 aus dem Bereich des Einlaufsterns 4 auf die Bodenplatte 11 geschoben und anschließend von den nachlaufenden Zahnflanken 6a weiter mitgenommen und können dabei gegebenenfalls auch bezüglich der Bodenplatte 11 verschoben werden. Dabei werden die Dosen 2 zusätzlich seitlich geführt.

Zu diesem Zweck ist wenigstens eine im Füllbetrieb stationäre Führungsschiene 12 außerhalb des Füllerteilkreises 3a angeordnet und erstreckt sich dabei wenigstens vom eingangsseitigen Übergangspunkt 7 bis zum Aufsetzpunkt 8. Die Dosen 2 werden dadurch beim Herauslaufen aus den Sterntaschen 5 und beim Mitnehmen / Weiterschieben der Dosen 2 mittels der nachlaufenden Zahnflanken 6a seitlich entlang des Füllerteilkreises 3a geführt, beispielsweise entgegen am Füllerkarussell 3 auftretender Fliehkräfte.

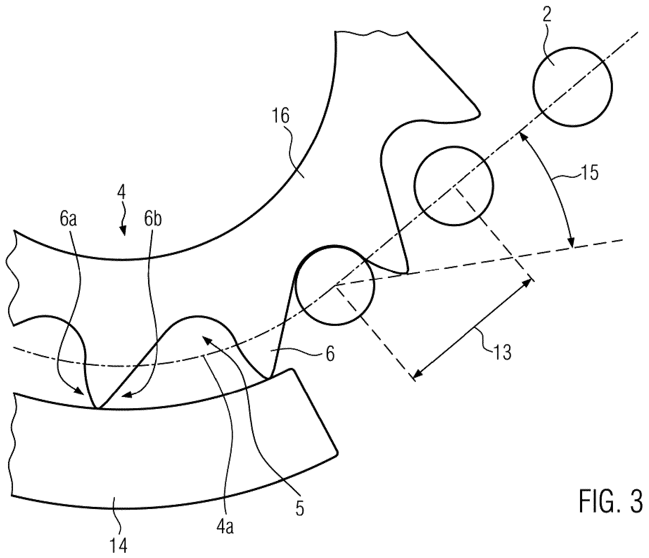

Folglich laufen die Dosen 2 bis zum Aufsetzpunkt 8 zuverlässig bezüglich des Füllerteilkreises 3a zentriert weiter. Hierbei bewirken die nachlaufenden Zahnflanken 6a einen Weitertransport der Dosen 2 unter Einhaltung einer Transportteilung 13 des Einlaufsterns 4 (siehe Figur 3).

In den Figuren 1 und 2 ist ferner eine an sich bekannte Führungsschiene 14 dargestellt, die sich umfänglich außerhalb des Einlaufteilkreises 4a um den Einlaufstern 4 erstreckt.

Die Figur 3 lässt erkennen, dass die Zähne 6 je nach Durchmesser der Dosen 2, Transportteilung 13 der Dosen 2 und Durchmesser des Füllerteilkreises 3a unterschiedlich konturiert und dimensioniert werden können. Beispielsweise stehen die Zähne 6 radial umso weiter über den Einlaufteilkreis 4a über, je größer die Transportteilung 13 ist und/oder je kleiner der Durchmesser des Füllerteilkreises 3a ist. Die Kontur der nachlaufenden Zahnflanken 6a kann ebenso wie die Kontur zugehöriger vorauslaufender Zahnflanken 6b bezüglich der oben genannten Parameter optimiert werden.

Möglich ist auch eine Anpassung der Zahnkonturen an einen gegenüber einer tangentialen Zufuhr definierten Einlaufwinkel 15 der Dosen 2. Entsprechend der Darstellung in der Figur 3 wäre dann beispielsweise eine Zufuhr der Dosen 2 zum Einlaufstern 4 entlang der gestrichelt eingezeichneten Linie denkbar.

Die Sterntaschen 5 und die Zähne 6 sind als vorzugsweise einteilig auswechselbare Garnitur 16 ausgebildet. Da am Füllerkarussell 3 kein formatspezifischer Führungsstern oder dergleichen Dosenaufnahme erforderlich ist, ist bei einem Formatwechsel mit vergleichsweise geringem apparativen, personellen und zeitlichen Aufwand lediglich die Garnitur 16 auszutauschen, gegebenenfalls auch stationäre eingangsseitige Führungsschienen 12, 14.

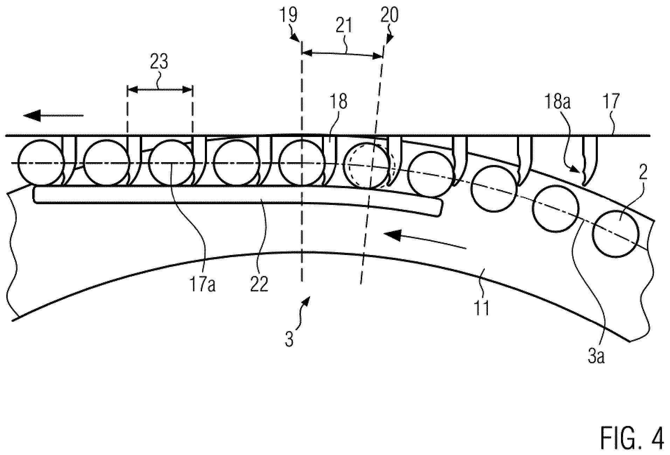

Die Figur 4 zeigt den Auslaufbereich der Füllmaschine 1 am Übergang des Füllerkarussells 3 zu einer die Dosen 2 diesbezüglich im Wesentlichen tangential ausleitenden Mitnehmerkette 17 mit Mitnehmern 18 und einer zugehörigen linearen Transportbahn 17a für die Dosen 2.

Am tangentialen Berührungspunkt des Füllerteilkreises 3a und der linearen Bewegungsbahn 17a der Mitnehmerkette 17 liegt ein ausgangsseitiger Übergangspunkt 19 und stromaufwärts davon ein Abhebepunkt 20, an dem die Füllventile 10 von den gefüllten Dosen 2 abgehoben werden. Der Abhebepunkt 20 und der ausgangsseitige Übergangspunkt 19 sind um einen geeigneten Maschinenwinkel 21 des Füllerkarussells 3 im Sinne eines Abhebewinkels entlang des Füllerteilkreises 3a versetzt.

Um die Dosen 2 zuverlässig entlang der geradlinigen Bewegungsbahn 17a weiter zu transportieren, ist wenigstens eine ausgangsseitige, stationäre Führungsschiene 22 zur seitlichen Führung der Dosen 2 innerhalb des Teilkreises 3a des Füllerkarussells 3 angeordnet. Dies verbessert die seitliche Führung der Dosen 2 beispielsweise im Zusammenwirken mit konkaven Ausnehmungen 18a oder dergleichen Führungskonturen der Mitnehmer 18. Die ausgangsseitige Führungsschiene 22 erstreckt sich vorzugsweise wenigstens vom Abhebepunkt 20 bis zum ausgangsseitigen Übergangspunkt 19.

Die Dosen 2 werden von den Mitnehmern 18 spätestens bei Erreichen des Abhebepunkts 20 berührt und weitergeschoben. Die Mitnehmerkette 17 läuft hierbei bekanntermaßen mit etwas höherer Transportgeschwindigkeit als das Füllerkarussell 3. Ferner weist die Mitnehmerkette 17 eine entsprechend größere Transportteilung 23 auf als die Transportteilung 13 des Einlaufsterns 4 und des Füllerkarussells 3.

Spätestens nach Verlassen der mitrotierenden Bodenplatte 11 können die Dosen 2 allein von den an den Mitnehmern 18 ausgebildeten konkaven Ausnehmungen 18a oder dergleichen Führungskonturen ausreichend seitlich geführt werden.

Die Mitnehmerkette 17 ist beispielsweise Bestandteil einer stromabwärts anschließenden Verschließmaschine oder stellt die Verbindung zu dieser her.

Anstellen von Dosen 2 könnten auch andere, ähnlich geformte und mechanisch belastbare Behälter in der Füllmaschine 1 wie beschrieben gehandhabt werden. Erforderlich ist lediglich, dass die Behälter vom Einlaufstern 4 mit dazu passenden Sterntaschen 5 und nachlaufenden Zahnflanken 6a vom eingangsseitigen Übergangspunkt 7 der Teilkreise bis zum Aufsetzpunkt 8 für zentrierende Füllventile 10 mitgenommen / weitergeschoben werden können.

Weitere an der Füllmaschine 1 obligatorisch vorhandene Komponenten können von üblicher Konstruktion und Funktion sein, so dass diese Komponenten nicht näher beschrieben sind. Beispielsweise werden die Dosen 2 volumetrisch mittels der Füllventile 10 aus zugeordneten Dosierkammern oder mittels Durchflussmessung an zugehörigen Produktleitungen gefüllt. Es könnten beliebige flüssige Produkte, beispielsweise Getränke, in unterschiedliche Dosenformate oder dergleichen Behältertypen abgefüllt werden.

Zu diesem Zweck sind die Sterntaschen 5 und Zähne 6 des Einlaufsterns 4 formatspezifisch dimensioniert und konturiert und können vorzugsweise als einteilige Garnituren 16 schnell und einfach gewechselt werden. Der apparative, personelle und zeitliche Aufwand verringert sich erheblich gegenüber dem Austausch am Füllerkarussell 3 mitrotierender Führungssterne.

## Patentansprüche

1. Verfahren zum Handhaben von Dosen (2) oder dergleichen Behälter in einer Füllmaschine (1), wobei die Dosen (2) in Sterntaschen (5) eines Einlaufsterns (4) wenigstens bis zu einem eingangsseitigen Übergangspunkt (7) zu einem Füllerteilkreis (3a) transportiert werden, **dadurch gekennzeichnet, dass** die Dosen (2) von an die Sterntaschen (5) anschließenden Zahnflanken (6a) des Einlaufsterns (4) wenigstens bis an einen Aufsetzpunkt (8) für entlang des Füllerteilkreises (3a) umlaufende Füllventile (10) mitgenommen und insbesondere geschoben werden.

2. Verfahren nach Anspruch 1, wobei die Dosen (2) von konvex gekrümmten Endabschnitten der Zahnflanken (6a) zum Aufsetzpunkt (8) geschoben werden.

3. Verfahren nach Anspruch 1 oder 2, wobei die Dosen (2) vom Übergangspunkt (7) zum Aufsetzpunkt (8) einen Maschinenwinkel (9) von 1 bis 10° zurücklegen.

4. Verfahren nach Anspruch 1, 2 oder 3, wobei die Dosen (2) ab dem Aufsetzpunkt (7) ausschließlich von den Füllventilen (10) bezüglich des Füllerteilkreises (3a) zentriert werden.

5. Verfahren nach einem der vorigen Ansprüche, wobei die Dosen (2) vom eingangsseitigen Übergangspunkt (7) bis zum Aufsetzpunkt (8) von einer außerhalb des Füllerteilkreises (3a) angeordneten, eingangsseitigen Führungsschiene (12) seitlich geführt werden.

6. Verfahren nach einem der vorigen Ansprüche, wobei die Dosen (2) an einem ausgangsseitigen Übergangspunkt (19) zu einer an das Füllerkarussell (3) anschließenden Mitnehmerkette (17) von wenigstens einer innerhalb des Füllerteilkreises (3a) angeordneten, ausgangsseitigen Führungsschiene (22) seitlich geführt werden.

7. Verfahren nach Anspruch 4 und 6, wobei die Füllventile (10) von den Dosen (2) abgehoben werden, nachdem die Dosen (2) die ausgangsseitige Führungsschiene (22) erreicht haben.

8. Füllmaschine (1) zum Abfüllen flüssiger Produkte in Dosen (2) oder dergleichen Behälter, umfassend einen Einlaufstern (4) und ein Füllerkarussell (3) mit daran umlaufenden Füllventilen (10), wobei der Einlaufstern (4) Sterntaschen (5) aufweist, um die Dosen (2) wenigstens bis zu einem auf dem Füllerteilkreis (3a) liegenden eingangsseitigen Übergangspunkt (7) zu transportieren, **dadurch gekennzeichnet, dass** an die Sterntaschen (5) nachlaufende Zahnflanken (6a) derart anschließen, dass sie die Dosen (2) wenigstens bis an einen Aufsetzpunkt (8) zum Aufsetzen der Füllventile (10) auf die Dosen (2) mitnehmen und insbesondere schieben.

9. Füllmaschine nach Anspruch 8, wobei sich die Zahnflanken (6a) nach außen über den Einlaufteilkreis (4a) des Einlaufsterns (4) hinaus erstrecken.

10. Füllmaschine nach Anspruch 8 oder 9, wobei die Zahnflanken (6a) konvex gekrümmte Endabschnitte aufweisen, um die Dosen (2) daran entlanglaufend zum Aufsetzpunkt (8) zu schieben.

11. Füllmaschine nach einem der Ansprüche 8 bis 10, wobei der Aufsetzpunkt (8) um einen Maschinenwinkel (9) von 1 bis 10° versetzt stromabwärts des eingangsseitigen Übergangspunkts (7) angeordnet ist.

12. Füllmaschine nach einem der Ansprüche 8 bis 11, wobei die Füllventile (10) zum Absenken auf die Dosen (2) und zu deren selbstführender Zentrierung bezüglich des Füllerteilkreises (3a) ausgebildet sind.

13. Füllmaschine nach einem der Ansprüche 8 bis 12, ferner mit wenigstens einer sich wenigstens vom eingangsseitigen Übergangspunkt (7) bis zum Aufsetzpunkt (8) außerhalb des Füllerteilkreises (3a) erstreckenden, eingangsseitigen Führungsschiene (12) für die Dosen (2).

14. Füllmaschine nach einem der Ansprüche 8 bis 13, ferner mit wenigstens einer an einem ausgangsseitigen Übergangspunkt (19) zu einer an das Füllerkarussell (3) anschließenden Mitnehmerkette (17) innerhalb des Füllerteilkreises (3a) angeordneten, ausgangsseitigen Führungsschiene (22) für die Dosen (2).

15. Füllmaschine nach Anspruch 14, wobei die Mitnehmerkette (17) Mitnehmer (18) umfasst, insbesondere mit einer konkaven Führungskontur / Ausnehmung (18a), zum Mitnehmen der Dosen (2) wenigstens ab einem stromaufwärts des ausgangsseitigen Übergangspunkts (19) liegenden Abhebepunkt (20) für die Füllventile (10).

## Claims

1. A method for handling cans (2) or similar containers in a filling machine (1), wherein the cans (2) are conveyed in star pockets (5) of an inlet starwheel (4) at least up to an inlet-side transfer point (7) towards a filling pitch circle (3a), **characterized in that** the cans (2) are driven, in particular pushed, from tooth flanks (6a) adjoining the star pockets (five) of the inlet starwheel (4) at least up to a contact point (8) for filling valves (10) circulating along the filling pitch circle (3a).

2. The method according to claim 1, wherein the cans (2) are pushed by convexly curved end portions of the tooth flanks (6a) to the contact point (8).

3. The method according to claims 1 or 2, wherein from the transfer point (7) to the contact point (8) the cans (2) cover a machine angle (9) from 1 to 10°.

4. The method according to claims 1, 2 or 3, wherein from the contact point (7) the cans (2) are centred with respect to the filling pitch circle (3a) exclusively by the filling valves (10).

5. The method according to anyone of the preceding claims, wherein from the inlet-side transfer point (7) to the contact point (8) the cans (2) are laterally guided by an inlet-side guide rail (12) positioned outside the filling pitch circle (3a).

6. The method according to anyone of the preceding claims, wherein the cans (2) are laterally guided by at least one outlet-side guide rail (22) positioned within the filling pitch circle (3a) at an outlet-side transfer point (19) to a driver chain (17) adjoining the filling carousel (3).

7. The method according to claims 4 and 6, wherein the filling valves (10) are lifted off the cans (2) after the cans (2) have reached the outlet-side guide rail (22).

8. A filling machine for filling liquid products into cans (2) or similar containers, comprising an inlet starwheel (4) and a filling carousel (3) having filling valves (10) circulating the therearound, wherein the inlet starwheel (4) includes star pockets (5) for conveying the cans (2) at least up to an inlet-side transfer point (7) arranged on the filling pitch circle (3a), **characterized in that** trailing tooth flanks (6a) adjoin the star pockets (5) so that they drive, in particular push, the cans (2) at least up to a contact point (8) for placing the filling valves (10) on the cans (2).

9. The filling machine according to claim 8, wherein the tooth flanks (6a) extend outwardly beyond the inlet pitch circle (4a) of the inlet starwheel (4).

10. The filling machine according to claims 8 or 9, wherein the tooth flanks (6a) include curved and portions for the cans (2) to be pushed to the contact point (8) while moving therealong.

11. The filling machine according to anyone of claims 8 to 10, wherein the contact point (8) is arranged offset by a machine angle (9) from 1 to 10° downstream of the inlet-side transfer point (7).

12. The filling machine according to anyone of claims 8 to 11, wherein the filling valves (10) are configured for lowering onto the cans (2) and for self-guided centring the same with respect to the filling pitch circle (3a).

13. The filling machine according to anyone of claims 8 to 12, further comprising at least one guide rail (12) for the cans (2) extending at least from the inlet-side transfer point (7) up to the contact point (8) outside the filling pitch circle (3a).

14. The filling machine according to anyone of claims 8 to 13, further comprising at least one outlet-side guide rail (22) for the cans (2) arranged within the filling pitch circle (3a) at an outlet-side transfer point (19) to a driver chain (17) adjoining the filling carousel (3).

15. The filling machine according to claim 14, wherein the driver chain (17) comprises driving members (18) having in particular a concave guiding contour click is/recess (18a) for driving the cans (2) at least from a lifting point (20) for the filling valves (10) upstream of the outlet-side transfer point (19).

## Revendications

1. Procédé de manutention de canettes (2) ou de récipients similaires dans une machine de remplissage (1), dans lequel les canettes (2) sont transportées dans des poches en étoile (5) depuis une étoile d'admission (4) au moins jusqu'à un point de transfert côté entrée (7) vers un cercle primitif de remplissage (3a), **caractérisé en ce que** les canettes (2) sont emportées, et en particulier poussées, par des flancs de dents (6a) de l'étoile d'admission (4) adjacents aux poches en étoile (5) au moins jusqu'à un point de placement (8) pour des vannes de remplissage (10) circonférentielles au cercle primitif de remplissage (3a).

2. Procédé selon la revendication 1, dans lequel les canettes (2) sont poussées depuis des sections d'extrémité convexes des flancs de dent (6a) jusqu'au point de placement (8).

3. Procédé selon la revendication 1 ou 2, dans lequel les canettes (2) parcourent un angle de machine (9) de 1° à 10° depuis le point de transfert (7) jusqu'au point de placement (8).

4. Procédé selon la revendication 1, 2 ou 3, dans lequel les canettes (2) sont centrées par rapport au cercle primitif de remplissage (3a) à partir du point de placement (7) exclusivement par les vannes de remplissage (10).

5. Procédé selon l'une des revendications précédentes, dans lequel les canettes (2) sont guidées latéralement depuis le point de transfert côté entrée (7) jusqu'au point de placement (8) par un rail de guidage côté entrée (12) agencé à l'extérieur du cercle primitif de remplissage (3a).

6. Procédé selon l'une des revendications précédentes, dans lequel les canettes (2) sont guidées latéralement à un point de transfert côté sortie (19) vers une chaîne d'entraînement (17) adjacente au carrousel de remplissage (3) par au moins un rail de guidage côté sortie (22) agencé à l'intérieur du cercle primitif de remplissage (3a).

7. Procédé selon les revendications 4 et 6, dans lequel les vannes de remplissage (10) sont enlevées des canettes (2) après que les canettes (2) ont atteint le rail de guidage côté sortie (22).

8. Machine de remplissage (1) pour le remplissage de produits liquides dans des canettes (2) ou des récipients similaires, comprenant une étoile d'admission (4) et un carrousel de remplissage (3) comportant des vannes de remplissage (10) circonférentielles, dans lequel l'étoile d'admission (4) comporte des poches en étoile (5) pour transporter les canettes (2) au moins jusqu'à un point de transfert côté entrée (7) situé sur le cercle primitif de remplissage (3a), **caractérisée en ce que** les flancs de dents suiveurs (6a) se raccordent aux poches en étoile (5) de manière à emporter, et en particulier à pousser, les canettes (2) au moins jusqu'à un point de placement (8) pour placer les vannes de remplissage (10) sur les canettes (2).

9. Machine de remplissage selon la revendication 8, dans laquelle les flancs de dents (6a) s'étendent vers l'extérieur au-delà du cercle primitif d'admission (4a) de l'étoile d'admission (4).

10. Machine de remplissage selon la revendication 8 ou 9, dans laquelle les flancs de dents (6a) ont des sections d'extrémité convexes pour pousser longitudinalement les canettes (2) jusqu'au point de placement (8).

11. Machine de remplissage selon l'une des revendications 8 à 10, dans laquelle le point de placement (8) est agencé en aval du point de transfert côté entrée (7), décalé d'un angle de machine (9) de 1° à 10°.

12. Machine de remplissage selon l'une des revendications 8 à 11, dans laquelle les vannes de remplissage (10) sont conçues pour descendre sur les canettes (2) et pour auto-guider leur centrage par rapport au cercle primitif de remplissage (3a).

13. Machine de remplissage selon l'une des revendications 8 à 12, comprenant en outre au moins un rail de guidage côté entrée (12) pour les canettes (2) s'étendant au moins depuis le point de transfert côté entrée (7) jusqu'au point de placement (8) à l'extérieur du cercle primitif de remplissage (3a).

14. Machine de remplissage selon l'une des revendications 8 à 13, comprenant en outre au moins un rail de guidage côté sortie (22) pour les canettes (2), agencé à un point de transfert côté sortie (19) vers une chaîne d'entraînement (17) adjacente au carrousel de remplissage (3) à l'intérieur du cercle primitif de remplissage (3a).

15. Machine de remplissage selon la revendication 14, dans laquelle la chaîne d'entraînement (17) comprend des entraîneurs (18), en particulier avec un contour de guidage concave ou une cavité (18a), pour entraîner les canettes (2) le long au moins d'un point d'enlèvement (20) pour les vannes de remplissage (10) situées en amont du point de transfert côté sortie (19).
